# EUROPÄISCHE PATENTSCHRIFT

(11) **EP 0 417 035 B1**
(45) Veröffentlichungstag und Bekanntmachung des Hinweises auf die Patenterteilung: **19.05.1993**
(21) Anmeldenummer: 90810633.9
(22) Anmeldetag: 22.08.1990
(51) Int. Cl.: B65D 81/32, B65D 25/08, E21D 20/02

(54) **Ankerpatrone**
Anchor cartridge
Cartouche de scellement

(30) Priorität: 06.09.1989 DE 3929603
(43) Veröffentlichungstag der Anmeldung: 13.03.1991
(73) Patentinhaber: HILTI Aktiengesellschaft, 9494 Schaan (LI)
(72) Erfinder: Mauthe, Peter, D-8939 Türkheim (DE)
(74) Vertreter: Wildi, Roland

(56) Entgegenhaltungen:
- WO-A-82/00281
- DE-A- 3 416 094
- DE-B- 1 935 149
- US-A- 4 341 301
- US-A- 4 345 686

## Beschreibung

Die Erfindung betrifft einen Behälter für eine aushärtende Mehrkomponenten-Masse zur Verankerung eines Befestigungselementes in einem Bohrloch, mit einem Grundkörper aus zerstörbarem Material der wenigstens zwei voneinander getrennte, geschlossene, sich im wesentlichen axial und parallel zueinander erstreckende Kammern aufweist, welche Hohlräume für die Kömponenten bilden.

Bei der Verankerung von Befestigungselementen mittels aushärtender Mehrkomponenten-Massen sind zwei grundsätzlich verschiedene Systeme bekannt. Beim einen, vor allem für Hohlräume aufweisende Aufnahmematerialien angewendeten System werden die Komponenten mittels eines Dosiergerätes aus Grosskartuschen, welche die Masse für mehrere Befestigungen enthalten, ausgepresst, miteinander vermischt und ins Bohrloch eingebracht. Diese Lösung ist zwar sehr wirtschaftlich. Sie erfordert jedoch ein spezielles Dosiergerät und ermöglicht Dosierfehler, indem zu wenig oder zu viel Masse in das Bohrloch eingebracht wird.

Beim zweiten, beispielsweise aus der DE-A-3 916 094 bekannten System sind die Komponenten für eine einzige Befestigung vorportioniert und in voneinander geschlossenen Kammern eines in das Bohrloch einzuführenden Behälters angeordnet. Der Behälter besteht meist aus einem ersten Teil für die eine Komponente und wenigstens einem zweiten Teil für die andere Komponente. Das zweite Teil kann im Innern des ersten Teiles oder, wie beispielsweise aus der DE-B-1 935 149 bekannt, auf dessen Aussenseite angeordnet werden. Die Behälterwandungen bestehen aus einem zerstörbaren Material, vorzugsweise Glas oder Kunststoff. Die Kunststoffe können flexible Folien oder harte, spröde Materialien sein. Neben den Komponenten enthalten die Kammern meistens auch mehr oder weniger grosse Anteile an Füllstoffen. Die Kammern können beispielsweise durch Abschmelzen, Verschweissen oder durch zusätzliche Hilfsmittel wie Deckel, Pfropfen oder dergleichen verschlossen werden.

Die Herstellung und das Abfüllen solcher Behälter ist relativ aufwendig. Ausserdem können insbesondere aus Glas bestehende Behälter beim Transport oder der Handhabung vorzeitig beschädigt oder zerstört werden. Bei der Verwendung von Glas oder transparenten Kunststoffen besteht ausserdem das Problem der Alterung der Komponenten infolge von Lichteinwirkung.

Aus der WO-A1-82/00281 ist ein Behälter für eine aushärtende Mehrkomponenten-Masse zur Verankerung eines Befestigungselementes in einem Bohrloch bekannt. Der Grundkörper des Behälters weist mehrere voneinander getrennte, geschlossene, im wesentlichen axial und parallel zueinander erstreckende Kammern auf, die der Aufnahme der einzelnen Komponenten dienen.

Dieser bekannte Behälter weist den Nachteil auf, dass die Menge der in das Bohrloch einzubringenden aushärtenden Masse nicht auf die gewünschte Einbindetiefe der Ankerstange angepasst werden kann.

Der Erfindung liegt die Aufgabe zugrunde, einen Behälter für aushärtende Mehrkomponenten-Massen zu schaffen, der in der Lage ist, die Menge der ins Bohrloch einzubringenden, aushärtenden Masse der gewünschten Einbindetiefe der Ankerstange anzupassen.

Gemäss der Erfindung wird dies dadurch erreicht, dass die Hohlräume als verschliessbare Bohrungen ausgebildet sind und der Grundkörper an seinen Stirnseiten je einen Ansatz und eine Vertiefung aufweist, die sich in Längsrichtung des Grundkörpers von dessen Stirnseite erstrecken.

Die Hohlräume sind als verschliessbare Bohrungen ausgebildet, so dass sie gut herstellbar sind und auf einfache Weise mittels Pfropfen oder dergleichen verschlossen werden können. Als Bohrungen ausgebildete Hohlräume können relativ nahe beieinander angeordnet werden, ohne dass der Grundkörper dadurch stark geschwächt wird.

Für Befestigungen in Bohrlöchern mit unterschiedlicher Tiefe weist der Grundkörper an seinen Stirnseiten in Längsrichtung des Grundkörpers verlaufende Ansätze und Vertiefungen auf, die dem Verbinden mit weiteren Grundkörpern dienen. Je nach der gewünschten Einbindelänge des Befestigungselementes in Bohrloch können somit mehrere Grundkörper zu einem gemeinsamen verlängerten Grundkörper verbunden werden. Die Ansätze oder Vertiefungen können beispielsweise als Gewinde oder Rastelemente ausgebildet werden. Die Grundkörper können entweder nach dem Verfüllen der Hohlräume mit den Komponenten vom Anwender selbst oder bei der Herstellung vor dem Verfüllen der Hohlräume miteinander verbunden werden.

Die Hohlräume sind vorteilhaft als verschliessbare Sacklöcher ausgebildet. es entsteht dadurch der Vorteil, dass nur an einem Ende verschlossen werden muss und zudem die Herstellung weiter vereinfacht wird. Durch unterschiedliche Tiefe der Sacklöcher kann eine bestimmte Verteilung der Komponenten entlang der Längsachse des Grundkörpers erreicht werden. Beispielsweise ist es möglich, dass der Grundkörper an seinem rückwärtigen Ende eine höhere Härterkonzentration aufweist, so dass es in diesem Bereich zu einem rascheren Aushärten der Komponenten im Bohrloch kommt und ein Ausfliessen der noch nicht ausgehärteten Masse aus dem Bohrloch dadurch verhindert wird.

Die Hohlräume können nach dem Verfüllen mit den Komponenten einzeln verschlossen werden. Darüber hinaus ist es zweckmässig, dass zum Verschliessen der Hohlräume an wenigstens einer Stirnseite des Grundkörpers Deckel vorgesehen sind, welche gleichzeitig mehrere oder alle Hohlräume verschliessen und beispielsweise auf die Stirnseite des Grundkörpers aufgeklebt oder mit diesem verrastet werden. An der Innenseite des Deckels können auch Pfropfen für die einzelnen Hohlräume angeordnet werden. Solche Pfropfen können gleichzeitig der Verrastung des Deckels mit dem Grundkörper dienen. Bei Grundkörpern mit nach beiden Stirnseiten hin offenen Hohlräumen wird zweckmässigerweise zunächst an einer Stirnseite ein erster Deckel und nach dem Verfüllen der Hohlräume am gegenüberliegenden Ende ein zweiter Deckel aufgesetzt. Bei als Sacklöcher ausgebildeten Hohlräumen können diese auch von beiden Stirnseiten des Grundkörpers ausgehen, separat mit den Komponenten verfüllt und durch Deckel verschlossen werden.

Der Grundkörper ist im Querschnitt zweckmässig kreisförmig ausgebildet und weist somit die Form eines Zylinders auf. Der Aussendurchmesser des Zylinders entspricht vorzugsweise etwa dem Durchmesser des Bohrloches im Aufnahmematerial. Gegebenenfalls sind an sich bekannte Haltemittel wie federnde Zungen, Lippen oder dergleichen vorzusehen, um ein Herausrutschen des Grundkörpers aus nach oben gerichteten Bohrlöchern zu vermeiden.

Weiterhin ist es möglich, den Grundkörper im Querschnitt kreissegmentförmig auszubilden. Mehrere im Querschnitt kreissegmentförmig ausgebildete Grundkörper können somit nach Belieben zu einem im Querschnitt kreisförmigen Körper zusammengestellt werden. Das Verfüllen der Hohlräume mit den Komponenten kann vor oder nach diesem Zusammenstellen der einzelnen Grundkörper zu einem gemeinsamen Körper erfolgen.

Der Grundkörper besteht zweckmässig aus einem keramischen Material. Dazu kann beispielsweise Porzellan, Steingut oder dergleichen verwendet werden. Diese Materialien sind lichtundurchlässig und schützen somit die Komponenten gegen die Lichteinwirkung der Umgebung. Keramische Materialien sind spröde und im Bohrloch relativ leicht zerstörbar.

Die Erfindung soll nachstehend, anhand der sie beispielsweise wiedergebenden Zeichnungen, näher erläutert werden. Es zeigen:
- Fig. 1: einen erfindungsgemässen Behälter mit entferntem Deckel, in perspektivischer Darstellung;
- Fig. 2: eine weitere Ausführung eines erfindungsgemässen Behälters, in perspektivischer Darstellung;
- Fig. 3: eine dritte Ausführung eines erfindungsgemässen Behälters, in perspektivischer Darstellung.

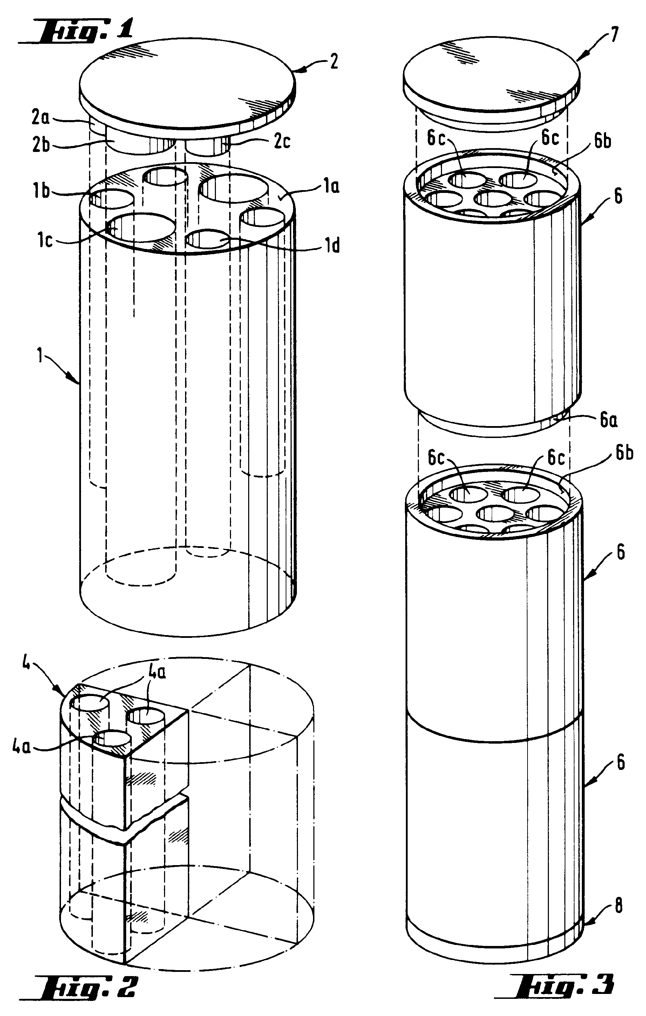

Der aus Fig. 1 ersichtliche Behälter weist einen zylindrischen Grundkörper 1 auf, der von einer Stirnseite 1a her mit Sacklöchern 1b, 1c, 1d versehen ist. Die Sacklöcher 1b, 1c, 1d bilden Hohlräume zur Aufnahme der Komponenten einer aushärtenden Mehrkomponenten-Masse. Das Volumen der Sacklöcher 1b, 1c, 1d entspricht dem Mischungsverhältnis der Komponenten. Gegebenenfalls können einzelne Sacklöcher 1b, 1c, 1d auch leer bleiben. Die Sacklöcher 1b, 1c, 1d werden nach dem Verfüllen mit den Komponenten durch einen Deckel 2 verschlossen. Der Deckel 2 weist Pfropfen 2a, 2b, 2c für die einzelnen Sacklöcher 1b, 1c, 1d auf, welche ein Verrasten des Deckels 2 mit dem Grundkörper 1 ermöglichen. Der Grundkörper 1 besteht aus einem keramischen Material wie beispielsweise Porzellan oder Steingut. Nach dem Einführen des Grundkörpers 1 in ein Bohrloch wird dieser meist durch drehendes Eintreiben einer Ankerstange im Bohrloch zerstört und die darin enthaltenen Komponenten miteinander vermischt, worauf diese aushärten. Die Bruchstücke des zerstörten Grundkörpers 1 dienen dabei als Füllstoffe. Die Komponenten können beispielsweise Harz und Härter oder eine Zementmischung und Wasser sein. Weiterhin können in den Sacklöchern 1b, 1c, 1d sowohl Harz und Härter als auch Zement und Wasser angeordnet werden, so dass nebeneinander ein organisches und ein anorganisches aushärtendes System besteht.

Fig. 2 zeigt einen Grundkörper 4, der im Querschnitt kreissegmentförmig ausgebildet ist. Der Grundkörper 4 ist mit Bohrungen 4a zur Aufnahme der Komponenten einer aushärtenden Mehrkomponenten-Masse versehen. Die Bohrungen 4a durchsetzen den Grundkörper 4 auf seiner ganzen Länge und können nach dem Einbringen der Komponenten stirnseitig verschlossen werden. Mehrere kreissegmentförmig ausgebildete Grundkörper 4 ergänzen sich zu einem im Querschnitt kreisförmigen Körper. Die kreissegmentförmigen Grundkörper 4 können mit den Komponenten verfüllt und anschliessend Je nach Bedarf beliebig zusammengestellt werden.

Fig. 3 zeigt mehrere Grundkörper 6, welche an ihren Stirnseiten Verbindungsmittel zum Verbinden mit weiteren Grundkörpern 6 aufweisen. Diese Verbindungsmittel sind als Ansatz 6a und im Durchmesser dem Ansatz 6a entsprechende Vertiefung 6b an der gegenüberliegenden Stirnseite ausgebildet. Der Ansatz 6a und die Vertiefung 6b ermöglichen ein axiales Zusammenstecken der Grundkörper 6. Die Grundkörper 6 sind mit axial verlaufenden Bohrungen 6c versehen, welche Hohlräume zur Aufnahme der Komponenten einer Mehrkomponenten-Masse bilden. Die Bohrungen 6c können vor dem Zusammenstecken der Grundkörper 6 mit den Komponenten verfüllt oder nach dem Zusammenstecken der Grundkörper 6 zur Deckung gebracht und gemeinsam verfüllt werden. Nach dem Verfüllen der Bohrungen 6c werden die äussersten Grundkörper 6 durch Deckel 7, 8 verschlossen. Durch das Zusammenstecken mehrerer Grundkörper 6 kann die Menge der ins Bohrloch einzubringenden aushärtenden Masse der gewünschten Einbindetiefe der Ankerstange angepasst werden.

## Patentansprüche

1. Behälter für eine aushärtende Mehrkomponenten-Masse zur Verankerung eines Befestigungselementes in einem Bohrloch, mit einem Grundkörper aus zerstörbarem Material der wenigstens zwei voneinander getrennte, geschlossene, sich im wesentlichen axial und parallel zueinander erstreckende Kammern aufweist, welche Hohlräume für die Komponenten bilden, **dadurch gekennzeichnet**, dass die Hohlräume als verschliessbare Bohrungen (4a, 6c) ausgebildet sind und der Grundkörper an seinen Stirnseiten je einen Ansatz (6a) und eine Vertiefung (6b) aufweist, die sich in Längsrichtung des Grundkörpers (6) von dessen Stirnseite erstrecken.

2. Behälter nach Anspruch 1, dadurch gekennzeichnet, dass die Hohlräume als verschliessbare Sacklöcher (1b, 1c, 1d) ausgebildet sind.

3. Behälter nach Anspruch 1 oder 2, dadurch gekennzeichnet, dass zum Verschliessen der Hohlräume an wenigstens einer Stirnseite (1a) des Grundkörpers (1, 6) Deckel (2, 7, 8) vorgesehen sind.

4. Behälter nach einem der Ansprüche 1 bis 3, dadurch gekennzeichnet, dass der Grundkörper (1, 6) im Querschnitt kreisförmig ausgebildet ist.

5. Behälter nach einem der Ansprüche 1 bis 4, dadurch gekennzeichnet, dass der Grundkörper (4) im Querschnitt kreissegmentförmig ausgebildet ist.

6. Behälter nach einem der Ansprüche 1 bis 5, dadurch gekennzeichnet, dass der Grundkörper (1, 4, 6) aus einem keramischen Material besteht.

## Claims

1. Container for a curing multi-component mass for anchoring a fixing element in a borehole. comprising a base body of destructible material having at least two chambers, which are separated from each other, closed and substantially extending axially and parallel to each other and which form cavitiesfor the components, **characterised in that** the cavities are arranged as closable bores (4a, 6c) and that the base body has at its ends a respective extension (6a) and a recess (6b) which extend from its end in the longitudinal direction of the base body (6).

2. Container according to claim 1, **characterised in that** the cavities are arranged as closable pocket holes (1b, 1c, 1d).

3. Container according to claim 1 or 2. **characterised in that** covers (2, 7, 8) are provided at at least one end (1a) of base body (1, 6) for sealing the cavities.

4. Container according to one of claims 1 to 3, **characrterised in that** the base body (1, 6) is arranged to be of circular cross-section.

5. Container according to one of claims 1 to 4, **characterised in that** the base body (4) is arranged to be of circularly segmented cross-section.

6. Container according to one of claims 1 to 5, **characterised in that** the base body (1, 4, 6) is made of a ceramic material.

## Revendications

1. Récipient pour une masse durcissable à plusieurs constituant pour l'ancrage d'un élément de fixation dans un trou de perçage, comprenant un corps de base réalisé dans un matériau destructible qui présente au moins deux chambres séparées, fermées et s'étendant sensiblement axialement et parallèlement l'une par rapport à l'autre et qui constituent des cavités pour des constituants, caractérisé en ce que les cavités sont conformées en alésages (4a, 6c) obturables et que le corps de base présente respectivement à ses faces frontales une embout (6a) et un creux (6b) qui s'étendent dans le sens longitudinal du corps de base (6) à partir de la face frontale de celui-ci.

2. Récipient selon la revendication 1, caractérisé en ce que les cavités sont conformées en trous borgnes (1b, 1c, 1d) obturables.

3. Récipient selon l'une des revendications 1 ou 2, caractérisé en ce que pour l'obturation des cavités, des couvercles (2, 7, 8) sont prévus sur au moins l'une des faces frontales (1a) du corps de base (1, 6).

4. Récipient selon l'une des revendications 1 à 3, caractérisé en ce que le corps de base (1, 6) présente une section transversale de forme circulaire.

5. Récipient selon l'une des revendications 1 à 4, caractérisé en ce que le corps de base (4) présente une section transversale en forme de segment de cercle.

6. Récipient selon l'une des revendication 1 à 5, caractérisé en ce que le corps de base (1, 4, 6) est constitué d'un matériau céramique.
